# FASCICULE DE BREVET EUROPEEN

(11) **EP 3 207 223 B1**
(45) Date de publication et mention de la délivrance du brevet: **16.05.2018**
(21) Numéro de dépôt: 15791693.3
(22) Date de dépôt: 06.10.2015
(51) Int. Cl.: F02C 7/26

(54) **ARCHITECTURE D'UN SYSTEME PROPULSIF D'UN HELICOPTERE COMPRENANT UN TURBOMOTEUR HYBRIDE ET UN SYSTEME DE REACTIVATION DE CE TURBOMOTEUR HYBRIDE**
ANTRIEBSSYSTEM EINES HUBSCHRAUBERS MIT HYBRIDTURBOSHAFT-TRIEBWERK UND SYSTEM ZUR REAKTIVIERUNG DIESES HYBRIDTURBOSHAFT-TRIEBWERKS
PROPULSION SYSTEM OF A HELICOPTER INCLUDING A HYBRID TURBOSHAFT ENGINE AND A SYSTEM FOR REACTIVATING SAID HYBRID TURBOSHAFT ENGINE

(30) Priorité: 13.10.2014 FR 1459777
(43) Date de publication de la demande: 23.08.2017
(73) Titulaire: Safran Helicopter Engines, 64510 Bordes (FR); Safran Electrical & Power, 31700 Blagnac (FR)
(72) Inventeur: VALLART, Philippe, F-64290 Gan (FR); BAZET, Jean-Michel, F-64110 Gelos (FR); LE DUIGOU, Loïc, F-77550 Moissy-Cramayel (FR)
(74) Mandataire: Gevers & Orès
(86) Numéro de dépôt international: PCT/FR2015/052683
(87) Numéro de publication internationale: WO 2016/059320

(56) Documents cités:
- EP-A2- 2 404 775
- WO-A2-2012/059671
- FR-A1- 3 003 514

## Description

### 1. Domaine technique de l'invention

L'invention concerne une architecture d'un système propulsif d'un hélicoptère multi-moteur -en particulier bimoteur ou trimoteur- et un hélicoptère comprenant un système propulsif présentant une telle architecture.

### 2. Arrière-plan technologique

Un hélicoptère bimoteur ou trimoteur présente de manière connue un système propulsif comprenant deux ou trois turbomoteurs, chaque turbomoteur comprenant un générateur de gaz et une turbine libre entrainée en rotation par le générateur de gaz, et solidaire d'un arbre de sortie. L'arbre de sortie de chaque turbine libre est adapté pour mettre en mouvement une boite de transmission de puissance, qui entraîne elle-même le rotor de l'hélicoptère.

Il est connu que lorsque l'hélicoptère est en situation de vol de croisière (c'est-à-dire lorsqu'il évolue dans des conditions normales, au cours de toutes les phases du vol, hors phases transitoires de décollage, de montée, d'atterrissage ou de vol stationnaire), les turbomoteurs développent des puissances faibles inférieures aux puissances maximales continues. Ces faibles niveaux de puissance entraînent une consommation spécifique (ci-après, Cs), définie comme le rapport entre la consommation horaire de carburant par la chambre de combustion du turbomoteur et la puissance mécanique fournie par ce turbomoteur, supérieure de l'ordre de 30% à la Cs de la puissance maximale de décollage, et donc une surconsommation en carburant en vol de croisière.

En outre, les turbomoteurs d'un hélicoptère sont conçus de manière surdimensionnée pour pouvoir maintenir l'hélicoptère en vol en cas de panne de l'un des moteurs. Cette situation de vol survient suite à la perte d'un moteur et se traduit par le fait que chaque moteur en fonctionnement fournit une puissance bien au-delà de sa puissance nominale pour permettre à l'hélicoptère de faire face à une situation périlleuse, puis de pouvoir poursuivre son vol.

Les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation.

Ces turbomoteurs surdimensionnés sont pénalisants en termes de masse et de consommation de carburant. Afin de réduire cette consommation en vol de croisière, il est envisagé de mettre en veille en vol au moins l'un des turbomoteurs. Le ou les moteurs actifs fonctionnent alors à des niveaux de puissance plus élevés pour fournir toute la puissance nécessaire et donc à des niveaux de Cs plus favorables.

Les demandeurs ont proposé dans les demandes FR1151717 et FR1359766 des procédés d'optimisation de la consommation spécifique des turbomoteurs d'un hélicoptère par la possibilité de placer au moins un turbomoteur dans un régime de vol stabilisé, dit continu, et au moins un turbomoteur dans un régime de veille particulier duquel il peut sortir de manière rapide ou normale, selon les besoins.

Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite rapide lorsqu'une panne ou un déficit de puissance du moteur actif intervient ou que les conditions de vol deviennent soudainement difficiles. Une telle sortie de veille d'urgence s'effectue sur une durée inférieure à 10s.

Le demandeur a déjà proposé un système de réactivation du turbomoteur en veille permettant de sortir d'un régime de veille (en mode normal ou rapide) qui met en oeuvre une machine électrique. Cette machine électrique peut être alimentée par le réseau de bord de l'hélicoptère (ci-après RDB), qui est un réseau de tension continue de 28 volts et/ou un réseau de tension issue d'une électronique de puissance adaptée connectée à une tension alternative compatible de l'aéronef. Il a également été proposé d'utiliser une machine électrique pour assister mécaniquement le turbomoteur pendant un régime de veille spécifique.

Du document FR 3 003 514 on connaît un hélicoptère bimoteur comprenant deux machines électriques par turbomoteur (un moteur et un moteur/générateur). Les inventeurs ont donc cherché à améliorer les performances des architectures de systèmes propulsifs comprenant au moins un turbomoteur adapté pour être mis en régime de veille et un système de réactivation du turbomoteur comprenant une machine électrique.

En particulier, les inventeurs ont cherché à proposer une nouvelle architecture d'un système propulsif qui permette d'obtenir un très bon taux de disponibilité du système de réactivation. Les inventeurs ont également cherché à proposer une nouvelle architecture qui permette de détecter les éventuelles pannes du système de réactivation du turbomoteur en veille.

### 3. Objectifs de l'invention

L'invention vise à fournir une architecture nouvelle du système propulsif d'un hélicoptère multi-moteur.

L'invention vise aussi à fournir, au moins dans un mode de réalisation, une architecture d'un système propulsif d'un hélicoptère multi-moteur comprenant un turbomoteur configuré pour pouvoir être mis en veille et un système de réactivation qui présente une disponibilité améliorée par rapport aux systèmes de l'art antérieur.

L'invention vise aussi à fournir, au moins dans un mode de réalisation, une architecture qui permet de détecter les éventuelles pannes du système de réactivation.

L'invention vise aussi à fournir un hélicoptère comprenant un système propulsif présentant une architecture selon l'invention.

### 4. Exposé de l'invention

Pour ce faire l'invention concerne une architecture d'un système propulsif d'un hélicoptère multi-moteur comprenant des turbomoteurs reliés à une boite de transmission de puissance, caractérisée en ce qu'elle comprend :
- au moins un turbomoteur parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- au moins deux chaines de contrôle de chaque turbomoteur hybride, dites chaines de réactivation, chaque chaine comprenant une machine électrique reliée au turbomoteur hybride et adaptée pour pouvoir l'entrainer en rotation, et au moins une source d'alimentation électrique de cette machine électrique, chaque chaine de réactivation étant configurée pour pouvoir entrainer ledit turbomoteur dans au moins un régime de fonctionnement parmi une pluralité de régimes prédéterminés.

Une architecture selon l'invention permet donc d'au moins dupliquer les chaines de réactivation d'un turbomoteur hybride apte à fonctionner dans un régime de veille. Le système de réactivation d'une architecture selon l'invention comprend donc au moins deux machines électriques distinctes, chaque machine étant reliée au turbomoteur hybride de manière à former au moins deux chaines de réactivation distinctes configurées pour pouvoir entrainer le turbomoteur vers au moins un régime de fonctionnement choisi parmi une pluralité de régimes prédéterminés.

Un turbomoteur hybride au sens de l'invention est un turbomoteur configuré pour pouvoir être mis, sur commande et volontairement, dans au moins un régime de veille prédéterminé, duquel il peut sortir de manière normale ou rapide (aussi dite urgente). Un turbomoteur ne peut être en veille qu'au cours d'un vol stabilisé de l'hélicoptère, c'est-à-dire, hors panne d'un turbomoteur de l'hélicoptère, au cours d'une situation de vol de croisière, lorsqu'il évolue dans des conditions normales. La sortie du régime de veille consiste à passer le turbomoteur en mode accélération du générateur de gaz par un entrainement compatible avec le mode de sortie imposée par les conditions (sortie de veille normale ou sortie de veille rapide, aussi dite d'urgence).

Avantageusement et selon l'invention, le turbomoteur comprenant un générateur de gaz, ladite pluralité de régimes prédéterminés comprend :
- un régime, dit régime de réactivation rapide, dans lequel ledit turbomoteur est entrainé en rotation depuis le régime de veille vers une vitesse comprise entre 80 et 105% de la vitesse nominale dudit générateur de gaz dudit turbomoteur dans un délai inférieur à 10s,
- un régime, dit régime de réactivation normale, dans lequel ledit turbomoteur est entrainé en rotation depuis le régime de veille vers une vitesse comprise entre 80 et 105% de la vitesse nominale dudit générateur de gaz dudit turbomoteur dans un délai compris entre 10s et 60s,

- un régime de veille, dit régime de super-ralenti assisté, dans lequel le turbomoteur est entraîné continument en rotation à une vitesse comprise entre 20 et 60% de la vitesse nominale dudit générateur de gaz dudit turbomoteur,
- un régime de veille, dite régime vireur, dans lequel le turbomoteur est entrainé continument en rotation à une vitesse comprise entre 5 et 20% de la vitesse nominale dudit générateur de gaz dudit turbomoteur.

Avantageusement et selon l'invention, ledit hélicoptère comprenant au moins un réseau de bord, chaque chaine de réactivation configurée pour entrainer ledit turbomoteur dans ledit régime de réactivation rapide comprend une source d'alimentation formée d'un stockeur d'énergie ; et chaque chaine de réactivation configurée pour entrainer ledit turbomoteur dans ledit régime de réactivation normale ou un régime de veille comprend une source d'alimentation formée d'un réseau de bord de l'hélicoptère.

Un stockeur d'énergie permet de fournir une puissance importante compatible avec l'énergie nécessaire pour permettre de sortir rapidement le turbomoteur de son régime de veille. Le stockeur est donc bien adapté à la chaine de réactivation destinée à la réactivation rapide du turbomoteur.

Le réseau de bord permet de tester la chaine de réactivation correspondante, à la fois au sol avant le décollage et au cours d'un vol, par exemple avant la mise en veille du turbomoteur. En outre, une telle source d'énergie est suffisante pour alimenter une machine électrique destinée à redémarrer le turbomoteur hybride dans des conditions normales de réactivation.

Avantageusement et selon l'invention, ledit réseau de bord est un réseau configuré pour fournir une tension alternative compatible de l'aéronef.

Selon une première variante avantageuse de l'invention, l'architecture comprend :
- au moins une première chaine de réactivation configurée pour pouvoir entraîner ledit turbomoteur à la fois dans le régime de réactivation rapide, le régime de réactivation normale et au moins un régime de veille,
- au moins une deuxième chaine de réactivation configurée pour pouvoir entrainer ledit turbomoteur uniquement dans ledit régime de réactivation normale.

Pour ce faire, en pratique, la première chaine est reliée à deux sources d'énergie électrique distinctes, un stockeur d'énergie et le réseau de bord de l'hélicoptère. La deuxième chaine est également reliée au réseau de bord.

Selon cette variante, les première et deuxième chaines de réactivation sont toutes les deux compatibles avec une réactivation normale du turbomoteur. Elles peuvent donc être sollicitées alternativement à chaque démarrage pour vérifier leur disponibilité.

La première chaine de réactivation est en outre configurée à la fois pour une réactivation rapide et un régime de veille. Aussi, au cours du régime de veille, la chaine est sollicitée, ce qui fait office de test de la chaine, en prévision d'une éventuelle réactivation rapide. L'absence de défaillance de la chaine est donc vérifiée au cours du régime de veille.

En cas d'indisponibilité de la première chaine, la deuxième chaine est sollicitée pour une réactivation normale du turbomoteur hybride.

Lors d'une réactivation rapide du turbomoteur hybride, la première chaine est sollicitée et la deuxième chaine peut éventuellement apporter un surplus de puissance si nécessaire.

En combinaison de la première variante, la deuxième chaine peut également être configurée pour pouvoir entrainer le turbomoteur dans ledit régime de réactivation rapide. Pour ce faire, la deuxième chaine est en pratique reliée à un deuxième stockeur d'énergie électrique.

Une architecture selon cette variante particulière dispose donc de deux chaines distinctes de réactivation permettant un redémarrage rapide du turbomoteur. Aussi, en cas de panne d'une chaine de réactivation rapide, l'autre chaine peut palier la panne.

Selon une deuxième variante avantageuse de l'invention, l'architecture comprend :
- au moins une première chaine de réactivation configurée pour pouvoir entraîner ledit turbomoteur à la fois dans le régime de réactivation rapide et le régime de réactivation normale,
- au moins une deuxième chaine de réactivation configurée pour pouvoir entrainer ledit turbomoteur uniquement dans ledit régime de veille.

Pour ce faire, en pratique, la première chaine de réactivation comprend deux sources d'alimentation, un stockeur d'énergie et le réseau de bord de l'hélicoptère, et la deuxième chaine de réactivation est directement reliée au réseau de bord.

La première chaine est sollicitée au démarrage pour vérifier la disponibilité de la chaine. En régime de veille, la deuxième chaine est sollicitée pour ne pas induire une usure de la chaine dédiée à la réactivation rapide. Une indisponibilité de la deuxième chaine conduit à un basculement vers la première chaine et à la réactivation du turbomoteur.

En combinaison de cette deuxième variante, la deuxième chaine peut également être configurée pour pouvoir entrainer le turbomoteur dans ledit régime de réactivation normale. Pour ce faire, la deuxième chaine est reliée au réseau de bord.

L'avantage de cette variante est notamment qu'en cas de panne de la première chaine, la deuxième chaine peut assurer la réactivation normale du turbomoteur.

En outre, les deux chaines peuvent être testées à chaque instant.

L'invention concerne également un hélicoptère comprenant un système propulsif caractérisé en ce que ledit système propulsif présente une architecture selon l'invention.

L'invention concerne également une architecture d'un système propulsif d'un hélicoptère multi-moteurs et un hélicoptère équipé d'un système propulsif présentant une telle architecture caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une architecture de l'état de la technique comprenant un turbomoteur contrôlé par une seule chaine de contrôle,
- la figure 2 est une vue schématique d'une autre architecture de l'état de la technique,
- la figure 3 est une vue schématique d'une architecture selon un mode de réalisation de l'invention,
- la figure 4 est une vue schématique d'une architecture selon un autre mode de réalisation de l'invention,
- la figure 5 est une vue schématique d'une architecture selon un autre mode de réalisation de l'invention,
- la figure 6 est une vue schématique d'une architecture selon un autre mode de réalisation de l'invention,
- la figure 7 est une vue schématique d'une architecture selon un autre mode de réalisation de l'invention.

### 6. Description détaillée de quelques modes de réalisation de l'invention

Les modes de réalisation décrits ci-après sont des exemples de réalisation de l'invention. Bien que la description détaillée se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation. En outre, sur les figures, les échelles et les proportions ne sont pas nécessairement respectées, et ce à des fins d'illustration et de clarté.

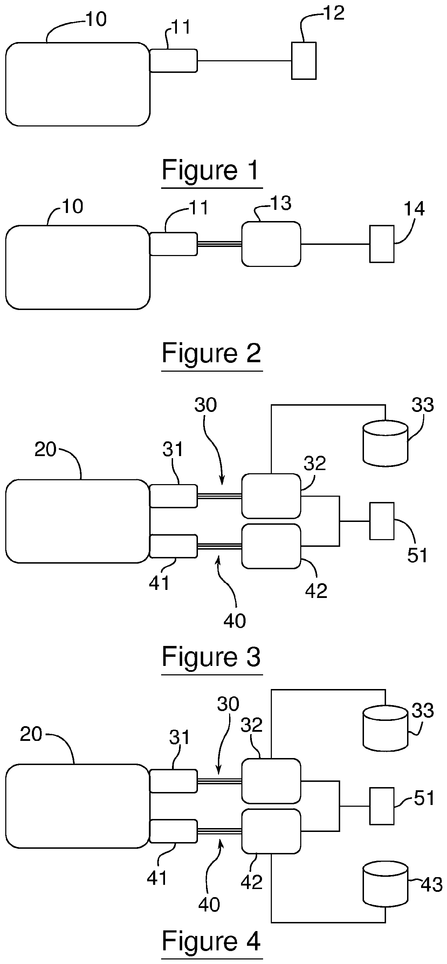

La figure 1 est une vue schématique d'une architecture d'un système propulsif d'un hélicoptère connu comprenant un turbomoteur 10 et une chaine de contrôle de ce turbomoteur. La chaine de contrôle comprend une machine 11 électrique adaptée pour entrainer sur commande le turbomoteur 10 en rotation de manière à assurer son démarrage. La machine électrique 11 tire son alimentation directement d'un réseau 12 de bord basse tension de l'hélicoptère, qui est typiquement un réseau qui délivre une tension continue de 28 volts.

La figure 2 est une vue schématique d'une architecture d'un système propulsif d'un hélicoptère connu comprenant le turbomoteur 10 et une autre chaine de contrôle de ce turbomoteur. La chaine de contrôle comprend une machine 11 électrique adaptée pour entrainer sur commande le turbomoteur 10 en rotation de manière à assurer son démarrage. La machine 11 électrique tire son alimentation d'un réseau 14 de bord haute tension alternative compatible de l'aéronef. La chaine comprend également un module 13 de conversion de puissance adaptée pour convertir la haute tension alternative fournie par le réseau 14 de bord en une tension pour piloter la machine 11 électrique.

Le démarrage du turbomoteur 10 des architectures des figures 1 et 2 est en général effectué au sol. Un redémarrage en vol d'un turbomoteur selon cette architecture est un événement exceptionnel.

Les figures 3 à 7 présentent des architectures selon l'invention qui permettent de mettre au moins un turbomoteur en veille et de le réactiver en vol. En outre, les architectures proposées permettent de fiabiliser les opérations de réactivation et de tester régulièrement les différentes chaines de réactivation.

Sur les figures 3 à 7, seul le turbomoteur hybride est représenté, étant entendu que dans une architecture multi-moteurs, en particulier bimoteur ou trimoteur, l'architecture comprend une pluralité de turbomoteurs dont au moins un turbomoteur hybride.

Une architecture selon l'invention comprend une pluralité de turbomoteurs reliés à une boite de transmission de puissance non représentée sur les figures.

Parmi la pluralité de turbomoteurs, au moins un turbomoteur, dit turbomoteur 20 hybride est apte à fonctionner dans au moins un régime de veille au cours d'un vol de croisière de l'hélicoptère.

Selon les modes de réalisation des figures 3 à 7, l'architecture comprend deux chaines 30, 40 de réactivation du turbomoteur 20 hybride. Dans toute la suite, la chaine de réactivation référencée 30 sera désignée comme la première chaine de réactivation et la chaine de réactivation référencée 40 sera désignée comme la deuxième chaine de réactivation.

Il est également précisé que les mêmes références 30 et 40 sont utilisées pour schématiser les première et deuxième chaine de réactivation sur les figures 3 à 7, bien que les chaines de réactivation ne soient pas les mêmes d'un mode de réalisation à l'autre.

Chaque chaine 30, 40 de réactivation est configurée pour pouvoir entrainer le turbomoteur 20 dans au moins un régime de fonctionnement parmi une pluralité de régimes prédéterminés.

Le turbomoteur comprenant un générateur de gaz, les régimes prédéterminés comprennent au moins les régimes suivants :
- un régime, dit régime de réactivation rapide, dans lequel le turbomoteur 20 est entrainé en rotation depuis le régime de veille vers une vitesse comprise entre 80 et 105% de la vitesse nominale du générateur de gaz du turbomoteur dans un délai inférieur à 10s,
- un régime, dit régime de réactivation normale, dans lequel le turbomoteur 20 est entrainé en rotation depuis le régime de veille vers une vitesse comprise entre 80 et 105% de la vitesse nominale du générateur de gaz du turbomoteur dans un délai compris entre 10s et 60s,
- un régime de veille, dit régime de super-ralenti assisté, dans lequel le turbomoteur 20 est entraîné continument en rotation à une vitesse comprise entre 20 et 60% de la vitesse nominale du générateur de gaz du turbomoteur,
- un régime de veille, dite régime vireur, dans lequel le turbomoteur 20 est entrainé continument en rotation à une vitesse comprise entre 5 et 20% de ladite vitesse nominale.

Sur la figure 3, la première chaine 30 de réactivation comprend une machine électrique 31, un dispositif 32 de conversion de puissance, un stockeur 33 d'énergie électrique, et un réseau 51 de bord. La deuxième chaine 40 de réactivation comprend une machine électrique 41, un dispositif 42 de conversion de puissance et un réseau 51 de bord, qui est commun avec la première chaine 30 de réactivation.

Ce mode de réalisation permet à la première chaine 30 de réactivation d'entraîner le turbomoteur 20 soit dans le régime de réactivation rapide (par l'utilisation de l'énergie du stockeur 33), soit le régime de réactivation normale (par l'utilisation de l'énergie du réseau de bord 51 ou du stockeur 33), soit dans au moins un régime de veille (par l'utilisation de l'énergie du réseau 51 de bord). Il permet également à la deuxième chaine 40 de réactivation de pouvoir entrainer le turbomoteur 20 dans ledit régime de réactivation normale (par l'utilisation de l'énergie du réseau 51 de bord).

Selon ce mode réalisation, les première et deuxième chaines peuvent être sollicitées alternativement à chaque démarrage pour vérifier leur disponibilité.

La première chaine étant en outre configurée pour une réactivation rapide et un régime de veille, le passage du turbomoteur 20 en veille permet de tester l'intégrité de la chaine 30 et donc de déceler une éventuelle défaillance interdisant alors une réactivation rapide du turbomoteur 20 par la chaine 30. En cas de défaillance décelée, la deuxième chaine 40 est alors sollicitée pour une réactivation normale du turbomoteur hybride 20.

Lors d'une réactivation rapide du turbomoteur hybride 20 par la première chaine 30 de réactivation, la deuxième chaine 40 peut en outre éventuellement apporter un surplus de puissance si nécessaire.

L'architecture représentée sur la figure 4 est une variante de celle de la figure 3. Cette architecture comprend, en plus des éléments décrits en lien avec la figure 3, un deuxième stockeur 43 agencé sur la deuxième chaine 40 de réactivation.

Ce mode de réalisation permet donc à la deuxième chaine 40 de réactivation d'entraîner également le turbomoteur 20 dans le régime de réactivation rapide (par l'utilisation de l'énergie du stockeur 43).

Cette architecture est donc redondante et présente une disponibilité élevée.

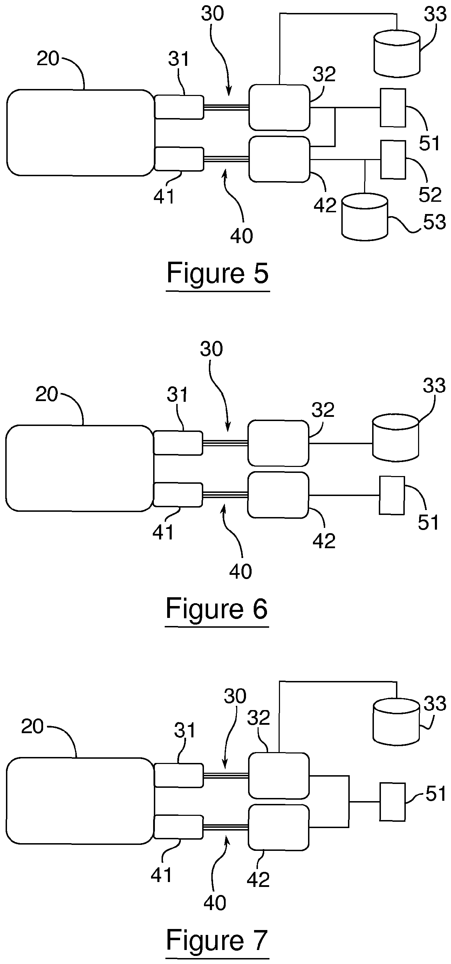

Sur la figure 5, la première chaine 30 de réactivation comprend une machine électrique 31, un dispositif 32 de conversion de puissance, un stockeur 33 d'énergie électrique, et un réseau 51 de bord qui est par exemple un réseau de bord délivrant une tension alternative de 115 volts. La deuxième chaine 40 de réactivation comprend une machine électrique 41, un dispositif 42 de conversion de puissance, un réseau 52 de bord, qui est par exemple un réseau délivrant une tension continue de 28 volts, le réseau 51 de bord commun à la première chaine 30 de réactivation, et de manière optionnelle un stockeur 53 d'énergie électrique.

Dans ce mode de réalisation, la première chaine 30 de réactivation permet d'entraîner le turbomoteur 20 dans le régime de réactivation rapide (par l'utilisation de l'énergie du stockeur 33), dans le régime de réactivation normale (par l'utilisation de l'énergie du réseau de bord 51 ou du stockeur 33) ou dans un régime de veille. Il permet également à la deuxième chaine 40 de réactivation de pouvoir entrainer le turbomoteur 20 dans un régime de réactivation normale (par l'utilisation de l'énergie du réseau de bord 52 ou du stockeur 53 optionnel ou par l'énergie du réseau de bord 51). En particulier, cette configuration particulière permet à la deuxième chaine 40 de réactivation du turbomoteur 20 de recourir au réseau de bord 51 pour des puissances importantes, par exemple supérieures à 10 KW, et de recourir au réseau de bord 52 pour des puissances plus faibles, par exemple inférieures à 10 KW.

Sur la figure 6, la première chaine 30 de réactivation comprend une machine électrique 31, un dispositif 32 de conversion de puissance et un stockeur 33 d'énergie électrique. La deuxième chaine 40 de réactivation comprend une machine électrique 41, un dispositif 42 de conversion de puissance et un réseau 51 de bord.

Dans ce mode de réalisation, la première chaine 30 de réactivation permet d'entraîner le turbomoteur 20 dans le régime de réactivation rapide (par l'utilisation de l'énergie du stockeur 33). Il permet également à la deuxième chaine 40 de réactivation de pouvoir entrainer le turbomoteur 20 dans un régime de veille (par l'utilisation de l'énergie du réseau 51 de bord) ou dans un régime de réactivation normale.

Sur la figure 7, la première chaine 30 de réactivation comprend une machine électrique 31, un dispositif 32 de conversion de puissance, un stockeur 33 d'énergie électrique, un réseau 51 de bord. La deuxième chaine 40 de réactivation comprend une machine électrique 41, un dispositif 42 de conversion de puissance et le réseau 51 de bord, commun à la première chaine 30.

Dans ce mode de réalisation, la première chaine 30 de réactivation permet d'entraîner le turbomoteur 20 dans le régime de réactivation rapide (par l'utilisation de l'énergie du stockeur 33) et dans le régime de réactivation normale (par l'utilisation de l'énergie du réseau 51 de bord ou du stockeur 33). Il permet également à la deuxième chaine 40 de réactivation de pouvoir entrainer le turbomoteur 20 dans un régime de veille ou de réactivation normale (par l'utilisation de l'énergie du réseau 51 de bord.

En variante, la deuxième chaine peut être configurée pour entrainer le turbomoteur 20 uniquement dans un régime de veille (par l'utilisation de l'énergie du réseau 51 de bord).

L'avantage de cette architecture est de pouvoir recourir à des machines électriques optimisées en puissance, en particulier pour la machine 41 électrique dont la seule fonction est d'assurer le régime de veille.

Pour chaque mode, la commande des chaines de réactivation est pilotée par le dispositif de régulation du turbomoteur connu sous l'acronyme anglais FADEC, pour *Full Authority Digital Engine Control.*

L'invention ne se limite pas aux seuls modes de réalisation décrits. En particulier, l'invention peut comprendre plusieurs turbomoteurs hybrides, chaque turbomoteur étant muni d'au moins deux chaines de réactivation propre telles que décrites.

## Revendications

1. Architecture d'un système propulsif d'un hélicoptère multi-moteur comprenant des turbomoteurs reliés à une boite de transmission de puissance, **caractérisée en ce qu'**elle comprend :
- au moins un turbomoteur parmi lesdits turbomoteurs, dit turbomoteur (20) hybride, apte à fonctionner dans au moins un régime de veille au cours d'un vol stabilisé de croisière de l'hélicoptère, les autres turbomoteurs fonctionnant seuls au cours de ce vol stabilisé,
- au moins deux chaines (30 ; 40) de contrôle de chaque turbomoteur (20) hybride, dites chaines de réactivation, chaque chaine (30 ; 40) comprenant une machine (31 ; 41) électrique reliée au turbomoteur (20) hybride et adaptée pour l'entrainer en rotation, et au moins une source (33 ; 43 ; 51) d'alimentation électrique de cette machine (31 ; 41) électrique, chaque chaine (30 ; 40) de réactivation étant configurée pour pouvoir entrainer ledit turbomoteur (20) dans au moins un régime de fonctionnement parmi une pluralité de régimes prédéterminés.

2. Architecture selon la revendication 1 dans laquelle chaque turbomoteur hybride comprend un générateur de gaz, **caractérisée en ce que** ladite pluralité de régimes prédéterminés comprend :
- un régime, dit régime de réactivation rapide, dans lequel ledit turbomoteur (20) est entrainé en rotation vers une vitesse comprise entre 80 et 105% d'une vitesse nominale dudit générateur de gaz dudit turbomoteur dans un délai inférieur à 10s,
- un régime, dit régime de réactivation normale, dans lequel ledit turbomoteur (20) est entrainé en rotation vers une vitesse comprise entre 80 et 105% de ladite vitesse nominale dudit générateur de gaz dudit turbomoteur dans un délai compris entre 10s et 60s,
- un régime de veille, dit régime de super-ralenti assisté, dans lequel le turbomoteur (20) est entraîné continument en rotation à une vitesse comprise entre 20 et 60% de ladite vitesse nominale dudit générateur de gaz dudit turbomoteur,
- un régime de veille, dite régime vireur, dans lequel ledit générateur de gaz dudit turbomoteur (20) est entrainé continument en rotation à une vitesse comprise entre 5 et 20% de ladite vitesse nominale.

3. Architecture selon la revendication 2, **caractérisée en ce que** :
- chaque chaine (30 ; 40) de réactivation configurée pour entrainer ledit générateur de gaz dudit turbomoteur (20) dans ledit régime de réactivation rapide comprend une source d'alimentation formée d'un stockeur (33 ; 43) d'énergie,
- chaque chaine (30 ; 40) de réactivation configurée pour entrainer ledit générateur de gaz dudit turbomoteur (20) dans ledit régime de réactivation normale ou un régime de veille comprend une source d'alimentation formée d'un réseau (51) de bord de l'hélicoptère.

4. Architecture selon la revendication 3, **caractérisée en ce que** ledit réseau (51) de bord est un réseau configuré pour fournir une tension alternative compatible de l'aéronef.

5. Architecture selon l'une des revendications 1 à 4, **caractérisée en ce qu'**elle comprend :
- au moins une première chaine (30) de réactivation configurée pour pouvoir entraîner ledit turbomoteur à la fois dans le régime de réactivation rapide, le régime de réactivation normale et au moins un régime de veille,
- au moins une deuxième (40) chaine de réactivation configurée pour pouvoir entrainer ledit turbomoteur uniquement dans ledit régime de réactivation normale.

6. Architecture selon la revendication 5, **caractérisée en ce que** ladite deuxième chaine (40) de réactivation est également configurée pour pouvoir entrainer le turbomoteur dans ledit régime de réactivation rapide.

7. Architecture selon l'une des revendications 1 à 4, **caractérisée en ce qu'**elle comprend :
- au moins une première chaine (30) de réactivation configurée pour pouvoir entraîner ledit turbomoteur à la fois dans le régime de réactivation rapide et le régime de réactivation normale,
- au moins une deuxième chaine (40) de réactivation configurée pour pouvoir entrainer ledit turbomoteur uniquement dans ledit régime de veille.

8. Architecture selon la revendication 7, **caractérisée en ce que** ladite deuxième chaine (40) de réactivation est également configurée pour pouvoir entrainer le turbomoteur (20) dans ledit régime de réactivation normale.

9. Hélicoptère comprenant un système propulsif **caractérisé en ce que** ledit système propulsif présente une architecture selon l'une des revendications 1 à 8.

## Patentansprüche

1. Architektur eines Schubsystems eines Mehrmotor-Helikopters, der Turbomotoren umfasst, die mit einem Kraftgetriebe verbunden sind, **dadurch gekennzeichnet, dass** sie umfasst:
- mindestens einen Turbomotoren unter den Turbomotoren, genannt Hybrid-Turbomotor (20), der zum Laufen in mindestens einem Bereitschaftsmodus während eines stabilisierten Reiseflugs des Helikopters fähig ist, wobei die anderen Turbomotoren während des stabilisierten Flugs allein laufen,
- mindestens zwei Kontrollketten (30; 40) jedes Hybrid-Turbomotors (20), genannt Reaktivierungsketten, wobei jede Kette (30; 40) eine elektrische Maschine (31; 41) umfasst, die mit dem Hybrid-Turbomotor (20) verbunden ist und so eingerichtet ist, dass sie ihn rotierend antreibt, und mindestens eine elektrische Energieversorgungsquelle (33; 43; 51) der elektrischen Maschine (31; 41), wobei jede Reaktivierungsketten (30; 40) so konfiguriert ist, dass sie den Turbomotor (20) in mindestens einem Funktionsmodus unter einer Mehrzahl von vorbestimmten Modi antreibt.

2. Architektur nach Anspruch 1, wobei jeder Hybrid-Turbomotor einen Gaserzeuger umfasst, **dadurch gekennzeichnet**, das die Mehrzahl von vorbestimmten Modi umfasst:
- einen Modus, genannt Schnellreaktivierungsmodus, in welchem der Turbomotor (20) rotierend bis zu einer Geschwindigkeit, die zwischen 80 und 105% einer Nominalgeschwindigkeit des Gaserzeugers des Turbomotors enthalten ist, in einer Zeitverzögerung unterhalb von 10s angetrieben wird,
- einen Modus, genannt Normalreaktivierungsmodus, in welchem der Turbomotor (20) rotierend bis zu einer Geschwindigkeit, die zwischen 80 und 105% der Nominalgeschwindigkeit des Gaserzeugers des Turbomotors enthalten ist, in einer Zeitverzögerung angetrieben wird, die zwischen 10s und 60s enthalten ist,
- einen Bereitschaftsmodus, genannt assistierter superverlangsamter Modus, in welchem der Turbomotor (20) kontinuierlich rotierend mit einer Geschwindigkeit angetrieben wird, die zwischen 20 und 60% der Nominalgeschwindigkeit des Gaserzeugers des Turbomotors enthalten ist,
- einen Bereitschaftsmodus, genannt Drehmodus, in welchem der Gaserzeuger des Turbomotors (20) kontinuierlich rotierend mit einer Geschwindigkeit angetrieben wird, die zwischen 5 und 20% der Nominalgeschwindigkeit enthalten ist.

3. Architektur nach Anspruch 2, **dadurch gekennzeichnet, dass**:
- jede Reaktivierungskette (30; 40), die so konfiguriert ist, dass sie den Gaserzeuger des Turbomotors (20) im Schnellreaktivierungsmodus antreibt, eine Versorgungsquelle umfasst, die aus einer Energiespeichereinheit (33; 43) gebildet ist,
- jede Reaktivierungsketten (30; 40), die so konfiguriert ist, dass sie den Gaserzeuger des Turbomotors (20) im Normalreaktivierungsmodus oder in einem Bereitschaftsmodus antreibt, eine Versorgungsquelle umfasst, die von einem Bordnetz (51) des Helikopters gebildet ist.

4. Architektur nach Anspruch 3, **dadurch gekennzeichnet, dass** das Bordnetz (51) ein Netz ist, das so konfiguriert ist, dass es eine zum Luftfahrzeug kompatible AC-Spannung liefert.

5. Architektur nach einem der Ansprüche 1 bis 4, **dadurch gekennzeichnet, dass** sie umfasst:
- mindestens eine erste Reaktivierungskette (30), die so konfiguriert ist, dass sie den Turbomotor zugleich im Schnellreaktivierungsmodus, im Normalreaktivierungsmodus und in mindestens einem Bereitschaftsmodus antreiben kann,
- mindestens eine zweite Reaktivierungskette (40), die so konfiguriert ist, dass sie den Turbomotor alleinig im Normalreaktivierungsmodus antreiben kann.

6. Architektur nach Anspruch 5, **dadurch gekennzeichnet, dass** die zweite Reaktivierungskette (40) auch so konfiguriert ist, dass sie den Turbomotor im Schnellreaktivierungsmodus antreiben kann.

7. Architektur nach einem der Ansprüche 1 bis 4, **dadurch gekennzeichnet, dass** sie umfasst:
- mindestens eine erste Reaktivierungskette (30), die so konfiguriert ist, dass sie den Turbomotor zugleich im Schnellreaktivierungsmodus und im Normalreaktivierungsmodus antreiben kann,
- mindestens eine zweite Reaktivierungskette (40), die so konfiguriert ist, dass sie den Turbomotor alleinig im Bereitschaftsmodus antreiben kann.

8. Architektur nach Anspruch 7, **dadurch gekennzeichnet, dass** die zweite Reaktivierungskette (40) auch so konfiguriert ist, dass sie den Turbomotor (20) im Normalreaktivierungsmodus antreiben kann.

9. Helikopter, der ein Schubsystem umfasst, **dadurch gekennzeichnet, dass** das Schubsystem eine Architektur nach einem der Ansprüche 1 bis 8 aufweist.

## Claims

1. Architecture of a propulsion system of a multi-engine helicopter comprising turboshaft engines connected to a power transmission gearbox, **characterised in that** it comprises:
- at least one turboshaft engine among said turboshaft engines, referred to as a hybrid turboshaft engine (20), capable of operating in at least one standby mode during a stable cruise flight of the helicopter, the other turboshaft engines operating alone during this stable flight;
- at least two systems (30; 40) for controlling each hybrid turboshaft engine (20), referred to as reactivation systems, each system (30; 40) comprising an electric machine (31; 41) connected to the hybrid turboshaft engine (20) and suitable for rotating said hybrid turboshaft engine, and at least one source (33; 43; 51) of electrical power for said electric machine (31; 41), each reactivation system (30; 40) being configured such that it can drive said turboshaft engine (20) in at least one operating mode among a plurality of predetermined modes.

2. Architecture according to claim 1, each hybrid turboshaft engine comprising a gas generator, **characterised in that** said plurality of predetermined modes comprises:
- a mode, referred to as the rapid reactivation mode, in which said turboshaft engine (20) is rotated up to a speed in the range of between 80 and 105 % of a nominal speed of said gas generator of said turboshaft engine in a period of less than 10 seconds;
- a mode, referred to as the normal reactivation mode, in which said turboshaft engine (20) is rotated up to a speed in the range of between 80 and 105 % of said nominal speed of said gas generator of said turboshaft engine in a period in the range of between 10 seconds and 60 seconds;
- a standby mode, referred to as the assisted super-idle mode, in which the turboshaft engine (20) is rotated continuously at a speed in the range of between 20 and 60 % of said nominal speed of said gas generator of said turboshaft engine;
- a standby mode, referred to as the turning mode, in which said gas generator of said turboshaft engine (20) is rotated continuously at a speed in the range of between 5 and 20 % of said nominal speed.

3. Architecture according to claim 2, **characterised in that**:
- each reactivation system (30; 40) configured to drive said gas generator of said turboshaft engine (20) in said rapid reactivation mode comprises a source of electrical power formed by an energy storage unit (33; 43);
- each reactivation system (30; 40) configured to drive said gas generator of said turboshaft engine (20) in said normal reactivation mode or a standby mode comprises a source of electrical power formed by an onboard network (51) of the helicopter.

4. Architecture according to claim 3, **characterised in that** said onboard network (51) is a network configured to supply a compatible AC voltage of the aircraft.

5. Architecture according to any of claims 1 to 4, **characterised in that** it comprises:
- at least one first reactivation system (30) configured to be capable of driving said turboshaft engine in the rapid reactivation mode and the normal reactivation mode and at least one standby mode;
- at least one second reactivation system (40) configured to be capable of driving said turboshaft engine solely in said normal reactivation mode.

6. Architecture according to claim 5, **characterised in that** said second reactivation system (40) is also configured to be capable of driving the turboshaft engine in said rapid reactivation mode.

7. Architecture according to any of claims 1 to 4, **characterised in that** it comprises:
- at least one first reactivation system (30) configured to be capable of driving said turboshaft engine in both the rapid reactivation mode and the normal reactivation mode;
- at least one second reactivation system (40) configured to be capable of driving said turboshaft engine solely in said standby mode.

8. Architecture according to claim 7, **characterised in that** said second reactivation system (40) is also configured to be capable of driving the turboshaft engine (20) in said normal reactivation mode.

9. Helicopter comprising a propulsion system **characterised in that** said propulsion system has an architecture according to any of claims 1 to 8.
